# EUROPÄISCHE PATENTSCHRIFT

(11) **EP 1 235 671 B1**
(45) Veröffentlichungstag und Bekanntmachung des Hinweises auf die Patenterteilung: **10.09.2003**
(21) Anmeldenummer: 00993245.0
(22) Anmeldetag: 29.11.2000
(51) Int. Cl.: B29B 13/06, F26B 17/12, F26B 21/14

(54) **KONTINUIERLICHES VERFAHREN ZUR TROCKNUNG UND NACHKONDENSATION VON GRANULAT, ANLAGE ZUR DURCHFÜHRUNG DES VERFAHRENS, UND VERWENDUNG DER ANLAGE UND DES VERFAHRENS**
CONTINUOUS PROCESS FOR THE DRYING AND POSTCONDENSATION OF GRANULATES, INSTALLATION FOR CARRYING OUT THE PROCESS, AND USE OF THE INSTALLATION AND THE PROCESS
PROCEDE CONTINU POUR LE SECHAGE ET LA POSTCONDENSATION DE GRANULES, INSTALLATION POUR LA MISE EN OEUVRE DU PROCEDE, ET UTILISATION DE L'INSTALLATION ET DU PROCEDE

(30) Priorität: 30.11.1999 DE 19957664
(43) Veröffentlichungstag der Anmeldung: 04.09.2002
(73) Patentinhaber: BASF AKTIENGESELLSCHAFT, 67056 Ludwigshafen (DE)
(72) Erfinder: LUDWIG, Alfons, 37671 Höxter (DE); PILLE, Ragnhild, 9120 Melsele (BE); PIPPER, Gunter, 67098 Bad Dürkheim (DE)
(74) Vertreter: Isenbruck, Günter, Dr.
(86) Internationale Anmeldenummer: EP0011972
(87) Internationale Veröffentlichungsnummer: WO01039947

(56) Entgegenhaltungen:
- EP-A- 0 002 717
- EP-A- 0 864 409
- DE-A- 3 224 903
- DE-A- 19 743 461
- DE-B- 1 604 817
- FR-A- 1 327 493
- FR-A- 2 284 845
- US-A- 4 584 366

## Beschreibung

Die Erfindung betrifft gemäß dem Oberbegriff des Anspruchs 1 ein Verfahren zur Trocknung von Polykondensatgranulat in fester Phase , eine Anlage zur Trocknung und Nachkondensation von Polykondensatgranulat in fester Phase, sowie eine Verwendung.
Ein solches Verfahren ist aus der DE-A-4 326 105 bekannt. Die überwiegend durch Schmelzpolykondensation hergestellten Polykondensate müssen getrocknet und in der Regel einer Nachbehandlung zur Abtrennung von Monomeren und Oligomeren sowie einer Nachkondensation zur Erhöhung des Molekulargewichts unterworfen werden.

Ein bewährter Apparat zur Trocknung und Nachkondensation von Polyamidgranulat ist der beispielsweise in DE-A 2 530 304 beschriebene Schachttrockner, der auch als Temperturm bezeichnet wird. Der Schachttrockner ist ein hochzylindrischer Apparat durch den von oben nach unten Polykondensatgranulat und im Gegenstrom ein heißes Inertgas, häufig Stickstoff, durchgeleitet wird. Das Polykondensatgranulat ist in der Regel feucht, da es in einem vorgeschalteten Verfahrensschritt einer Wasserwäsche zwecks Reduzierung des Gehalts an Oligomeren und Monomeren unterworfen wird. Im Schachttrockner erfolgt zum einen die Granulattrocknung und zum anderen die Aufheizung des Granulats auf eine produktspezifische Temperatur zur Festphasenkondensation. Der am Kopf des Schachttrockners austretende Inertgasstrom wird entstaubt und durch Abkühlen unter den Taupunkt entfeuchtet. Nach Aufheizen und gegebenenfalls Befreiung von Sauerstoffspuren wird er erneut in den Schachttrockner eingeleitet. Die Stelle, an der das Inertgas in den Schachttrockner zugeführt wird, ist in überwiegendem Maße eine Funktion des Schachtdurchmessers: die Schüttungshöhe oberhalb des Gaseintritts muß nämlich ausreichend hoch sein, um eine ausreichende Gleichverteilung des Inertgasstroms zu gewährleisten. In der Praxis liegt die Untergrenze für das Verhältnis von Schüttungshöhe zu Schachtdurchmesser im Bereich von 1,3 bis 2. Eine weitgehende Gleichverteilung des Inertgasstromes ist Voraussetzung für einen möglichst einheitlichen Trocknungsgrad des Granulats, der wiederum für eine möglichst geringe Schwankung der Viskositätszahl von Korn zu Korn von Bedeutung ist. Die durch die erforderliche weitgehende Gleichverteilung bedingte große relative Schütthöhe zum Schachtdurchmesser in der Trocknungszone führt zu Verweilzeiten für das Granulat, die, insbesondere bei hohen Trocknungs- bzw. Tempertemperaturen, um ein Vielfaches größer sind als die aufgrund der Trocknungskinetik erforderliche Verweilzeit. Aufgrund des hohen Druckverlustes muß zudem eine entsprechende Gebläseleistung mit relativ hohen Energiekosten zur Verfügung gestellt werden. Ein weiterer Nachteil des Schachttrockners ist die Begrenzung der Inertgasmenge durch den Wirbelpunkt des Granulats. Um den Wirbelpunkt nicht zu überschreiten, müssen daher Anlagen für hohe Kapazitäten mit entsprechend großen Schachtdurchmessern ausgelegt werden. Diese großen Schachtdurchmesser erschweren jedoch die Sicherstellung einer Pfropfenströmung im Schachttrockner, die für eine geringe Schwankung der Viskositätszahl von Korn zu Korn wesentlich ist, und erhöhen zudem die bereits erwähnten Energiekosten in Verbindung mit der Gleichverteilung des Inertgasstromes.

Die Durchführung von Trocknung und Temperung in einem einzigen Apparat, beispielsweise einem Schachttrockner, wie er in DE-A 2 530 304 beschrieben ist, hat zudem den Nachteil einer geringen Flexibilität bezüglich Durchsatz- und Verweilzeitveränderungen sowie bezüglich der Herstellung von Produkten mit unterschiedlicher Molmasse bzw. unter unterschiedlichen Temperbedingungen. Gemäß dem Vorschlag in DE-A 4 326 105 wird daher ein Apparat zum Vorerhitzen und -Trocknen vor den Schachttrockner geschaltet, wodurch der Trocknungs- und Temperprozeß entkoppelt werden. Danach sind vor dem Schachtapparat zwei Wirbelschichtapparate vorgesehen, von denen der erste eine sprudelnde Wirbelschicht und der zweite ein Fließbett mit Kolbenströmungscharakteristik aufweist. In kontinuierlichen Wirbelbetten wird das zu trocknende Gut in der Regel auf einen Anströmboden, häufig ein Lochblech, ein Spaltsieb oder einen Spezialboden, aufgegeben und dort von unten nach oben mit dem heißen Trocknungsgas durchströmt. Die Gasgeschwindigkeit wird dabei so eingestellt, daß das Gut in der Schwebe gehalten und nicht pneumatisch gefördert und ausgetragen wird. Das in Bewegung befindliche Gut verhält sich wie eine Flüssigkeit. Wird das Gut auf der einen Seite kontinuierlich zugeführt, so fließt es auf der andern Seite aus der Austragsöffnung hinaus. Das Gas erfüllt somit mehrere Aufgaben: es ist zum einen für das Fluidisieren verantwortlich und dient zum andern als Mittel zum Wärme- und Stoffaustausch. Wirbelbettapparate sind aufgrund des intensiven Wärme- und Stoffaustausches grundsätzlich zum schnellen Aufheizen und Trocknen geeignet. Für Produkte mit langsamer Trocknungskinetik, wozu beispielsweise Polyamid 6 zählt, wird der für den Produkttransport benötigte Gasstrom jedoch nicht ausreichend genutzt, der Einsatz von Wirbelbettapparaten ist somit in derartigen Fällen wenig wirtschaftlich.

Wirbelbettapparate haben den weiteren Nachteil, daß aufgrund der starken Fluidisierung die Produktverweilzeitverteilung im Vergleich zum Schachttrockner relativ breit ist. Dies bedingt einen ungleichförmigen Feuchtegehalt des Produkts am Ausgang des Wirbelbettapparates und somit am Eingang des nachgeschalteten Verweilzeitapparates. Die Festphasenkondensation zum weiteren Molmassenaufbau im Verweilzeitapparat reagiert empfindlich auf einen ungleichförmigen Feuchtegehalt des eintretenden Granulats. Dies führt zu Schwankungen in der relativen Viskosität von Korn zu Korn, die die Produktqualität, beispielsweise beim Schnellspinnen, beeinträchtigen. Ein weiterer Nachteil des Wirbelbettapparates ist die stärkere mechanische Beanspruchung des Granulats aufgrund der Fluidisierung und damit die Staubbildung.

Ferner ist aus der DE-A-197 43 461 eine Vorrichtung zum Trocknen von Granulat bekannt, insbesondere PET, PEN oder PA, die einen quaderförmigen Grundkörper aufweist, mit einer Zuführung für das Granulat im oberen Teil und einem Auslaß im unteren Teil, mit einer Zuführung auf einer Seitenfläche und einer Abführung auf der gegenüberliegenden Seitenfläche des quaderförmigen Grundkörpers für einen Inertgasstrom, sowie mit je einer Verteilungs- und Rückhalteeinrichtung im Bereich der Zuführung und Abführung des Inertgasstroms, die sich jeweils im wesentlichen über den gesamten vertikalen Querschnitt des quaderförmigen Grundkörpers erstreckt.

Demgegenüber ist es Aufgabe der Erfindung, ein Verfahren zur Trocknung und Nachkondensation von Granulat zur Verfügung zu stellen, das sich durch eine höhere Wirtschaftlichkeit auszeichnet, das eine enge Produkt- Verweilzeitverteilung, einen aufgrund der Unabhängigkeit von einem Wirbelpunkt deutlich erhöhten Inertgasmengenstrom und in der Folge eine deutlich erhöhte Kapazität gewährleistet. Weiterhin sollen der Trocknungs- und Temperprozeß entkoppelt und die Nachteile der bekannten Verfahren vermieden werden.

Die erfindungsgemäße besteht aus einem Verfahren gemäß Anspruch 1. Gegenstand der Erfindung ist auch eine Anlage gemäß Anspruch 3 zur Durchführung des Verfahrens, zowie die im Anspruch 6 angegebene Verwendung der Anlage und des Verfahrens.

Granulate liegen üblicherweise in Form von Körnern mit einer Teilchengröße im Bereich von 1,5 bis 5 mm, insbesondere von 2 bis 3 mm vor. Das Granulat kann zylinderförmige, kugelförmige oder linsenförmige Gestalt besitzen. Das erfindungsgemäß eingesetzte Granulat ist bevorzugt ein Polykondensatgranulat, insbesondere ein Polyester- oder Polyamidgranulat.

Polykondensate sind Polymere, die durch Kondensation aus Monomeren unter Abspaltung niedermolekularer Verbindungen hergestellt werden. Polykondensate, vorzugsweise Polyester und Polyamide, sind dem Fachmann bekannt und in der Literatur vielfach beschrieben, so daß sich hier detaillierte Angaben erübrigen.

Vorzugsweise setzt man teilkristalline Polykondensate ein.

Bevorzugte Polyamide sind Polycaprolactam (Polyamid 6), Polyhexamethylenadipinsäureamid (Polyamid 6,6), deren Copolymere sowie teilaromatische Copolyamide auf der Basis von Terephthalsäure, gewünschtenfalls Isophthalsäure, 5-Sulphoisophthalsäure, Adipinsäure, Hexamethylendiamin und Caprolactam.

Bevorzugte Polyester sind Polyalkylenterephthalate, insbesondere Polyethylenterephthalat (PETP) und Polybutylenterephthalat (PBTP).

In einer bevorzugten Ausführungsform setzt man Polykondensate ein, die Füllstoffe, Verstärkungsmittel und übliche Zusatzstoffe und Verarbeitungsmittel in einer Menge von in der Regel 0,1 bis 90, vorzugsweise 10 bis 75, und besonders bevorzugt 20 bis 70 Gew.-%, bezogen auf das Polykondensat, enthalten.

Als Polykondensate kann man sowohl niedermolekulare Polymere einsetzen, die man zu hochmolekularen Polymeren umsetzen möchte, insbesondere wenn diese niedermolekularen Polymere bereits Füll- und/oder andere Zusatzstoffe enthalten (Direktkonfektionierung). Auch höhermolekulare Polymere, bei denen man insbesondere nach einem Sekundärkonfektionierungsschritt das gewünschte (End)-Molekulargewicht einstellen möchte, sind zugänglich. Molgewichts-Änderungen können während des Konfektionsschrittes erfolgen, z.B. Auf- und Abbaureaktionen, beispielsweise durch Energieeintrag, Scherung oder durch chemische Reaktion mit den zugeführten Additiven.

Das Trocknen und thermische Behandeln erfolgt in einer Vorrichtung mit einem Inertgasstrom; als Inertgase können vorliegend insbesondere Stickstoff oder überhitzter Wasserdampf eingesetzt werden. Aus energetischen Gründen wird vorzugsweise überhitzter Wasserdampf, d. h. Wasserdampf mit einer Temperatur im Bereich von 120 bis 230°C verwendet. Bevorzugt führt man das Inertgas im Kreis, wobei der aus der Vorrichtung austretende Inertgasstrom über eine Entstaubungseinrichtung, beispielsweise einen Zyklon oder einen Filter geführt und nach erneutem Aufheizen in die Vorrichtung zurückgeführt wird. Bei Verwendung von Wasserdampf als Inertgas wird der überschüssige Wasserdampf ausgeschleust (Teilausschleusung). Bei Verwendung von Stickstoff wird der gesamte Inertgasstrom über einen Austaukühler oder über eine Waschkolonne gefahren, dadurch abgekühlt und enthaltenes Wasser auskondensiert.

Die Vorrichtung weist einen quaderförmigen Grundkörper auf, dessen Geometrie durch die vom Inertgas angeströmte Seitenfläche und die senkrecht zu dieser Seitenfläche gemessene Dicke der Vorrichtung festgelegt ist. Die Dicke beeinflußt in Kombination mit dem Inertgasmengenstrom unmittelbar den über die Granulatschüttung auftretenden Druckverlust im Apparat und damit die erforderlichen Energiekosten. Die Dicke des Apparates ist bei technisch relevanten Granulatdurchsätzen in der Regel größer als 0,1 m, bevorzugt größer als 0,2 m. Nach oben ist die Dicke durch die ansteigenden Energiekosten begrenzt und beträgt üblicherweise maximal 1 m, bevorzugt 0,6 m und besonders bevorzugt 0,4 m.

Die geometrischen Abmessungen der Vorrichtung (Apparatedicke und mit Inertgas beaufschlagte Seitenfläche) sowie der Inertgasdurchsatz durch die Vorrichtung können als drei unabhängige Variablen bei vorgegebenem Granulatdurchsatz sowie vorgegebener Feuchteabreicherung in der Vorrichtung betrachtet werden. Kriterien, die bei ihrer Festlegung eine wichtige Rolle spielen, sind insbesondere die Optimierung hinsichtlich der Energiekosten und Anforderungen an bauliche Gegebenheiten sowie das für die nachfolgende Festphasenkondensation erforderliche bzw. angestrebte Temperaturniveau.

Für technisch relevante Granulatdurchsätze, in der Regel im Bereich von 300 bis 12000 kg/h, und einer vorgegebenen Feuchteabreicherung, die insbesondere bei Polyamidgranulat in der Regel von einer Anfangsfeuchte von etwa 11 bis 15 Gew.-% auf weniger als 1 Gew.-%, insbesondere auf ca. 0,2 Gew.-% beträgt, ergeben sich bei technisch relevanten Inertgasdurchsätzen im Bereich von ca. 2000 bis 100 000 Nm³/h und einer durch die aufzuwendenden Energiekosten begrenzten Apparatdicke im Bereich von 0,1 bis 1 m, bevorzugt von 0,2 bis 0,6 m und besonders bevorzugt von 0,2 bis 0,4 m für die mit Inertgas beaufschlagte Seitenfläche der quaderförmigen Grundkörper Abmessungen im Bereich von 1 bis 50 m², bevorzugt von 1 bis 30 m². Bei höheren Granulatdurchsätzen ergeben sich entsprechend größere Inertgasmengen sowie gegebenenfalls größere Seitenflächen der quaderförmigen Grundkörper.

Die Dimensionierung der Vorrichtung in Abhängigkeit von der gegebenen Trocknungsaufgabe wird im folgenden beispielhaft verdeutlicht:

Ausgehend von einem Granulatdurchsatz von 4000 kg/h und einer Absenkung des Feuchtegehalts von 11 Gew.-% auf 0,2 Gew.-% bei einer Trocknungstemperatur von 180°C ergibt sich bei einem Inertgasdurchsatz von 25 000 Nm³/h und einer vorgewählten Apparatedicke von 0,3 m eine erforderliche Gasanströmfläche von 18 m². Die sich aus Granulatdurchsatz und Apparatevolumen ergebende Verweilzeit beträgt 53 Minuten. Wird die Gasmenge auf 40 000 Nm³/h erhöht, wobei die restlichen Parameter unverändert bleiben, so beträgt die erforderliche Gasanströmfläche lediglich 10 m² und die Verweilzeit sinkt auf ca. 30 Minuten.

Wird die Apparatedicke abgesenkt, so steigt die erforderliche Gasanströmfläche drastisch an: so sind bei einer Apparatedicke von 0,1 m und ansonsten unveränderten Trocknungsparametern Anströmflächen von 150 m² (bei einem Inertgasdurchsatz von 25 000 Nm³/h) bzw. von 95 m² (bei einem Gasdurchsatz von 40 000 Nm³/h) erforderlich.

Der Inertgasmengenstrom wird beim wirtschaftlich günstigen Einsatz von überhitztem Wasserdampf üblicherweise im Bereich von etwa 2 bis 8 kg Dampf pro kg Granulat eingestellt, bevorzugt im Bereich von etwa 4 bis 6 kg Dampf pro kg Granulat. Niedrigere Dampfdurchsätze führen zu Dampfaustrittstemperaturen im Produkteintrittsbereich unterhalb von 100°C, was zu Wasserkondensation auf dem Produkt führt und nicht erwünscht ist.

Die Verteilungs- und Rückhalteeinrichtungen im Bereich der Zuführung und Abführung des Inertgasstromes dienen der gleichmäßigen Gasverteilung sowie der Rückhaltung des Granulats. Sie erstrecken sich jeweils im wesentlichen über den gesamten vertikalen Querschnitt des quaderförmigen Grundkörpers und sind vorzugsweise als vertikale Böden mit Durchtrittsöffnungen ausgebildet. Die vertikalen Böden mit Durchtrittsöffnungen sind bevorzugt Lochbleche oder Spaltsiebe. Es können beispielsweise CONIDUR®-Feinlochbleche oder RIMA® bzw. CORIMA®-Spaltsiebe der Hein, Lehmann Trenn- und Fördertechnik GmbH eingesetzt werden. Die Verteilungs- und Rückhalteeinrichtung im Bereich der Zuführung des Inertgasstromes wird so ausgelegt, daß der Druckverlust etwa 10 bis 50 mbar und somit deutlich über 10 % des Druckverlustes der gesamten Granulatschüttung beträgt. Die zweite Verteilungs- und Rückhalteeinrichtung, die im Bereich der Abführung des Inertgasstromes angeordnet ist, kann für niedrigere Druckverluste ausgelegt sein; hier ist lediglich eine minimale mechanische Stärke erforderlich, um das Durchfallen von Granulat zu verhindern. Bei üblichen Granulatkornabmessungen im Bereich von ca. 2 bis 3 mm werden Böden mit Durchtrittsöffnungen im Bereich von 0,5 bis 1 mm gewählt, während bei feineren Granulaten entsprechend Böden mit kleineren Durchtrittsöffnungen zu verwenden sind.

Gemäß einer bevorzugten Ausführungsvariante wird die Inertgasstrommenge über den vertikalen Querschnitt des quaderförmigen Grundkörpers Von oben nach unten abnehmend eingestellt. Die Inertgasstrommenge kann dabei sowohl kontinuierlich als auch bevorzugt diskontinuierlich abnehmend eingestellt werden. Durch die Abnahme der Inertgasstrommenge von oben nach unten wird bei gleicher Trocknungsaufgabe die erforderliche Inertgasmenge reduziert, mit entsprechender Verbesserung der Wirtschaftlichkeit. Dies wird am folgenden Beispiel verdeutlicht: ausgehend von einem Granulatdurchsatz von 4000 kg/h und einer Absenkung des Feuchtegehalts von 11 Gew.-% auf 0,2 Gew.-% bei einer Trocknungstemperatur von 180°C ist bei einer Trocknerdicke von 0,4 m und einer Anströmfläche von 10 m² ein konstanter Inertgasstrom von 25 000 Nm³/h erforderlich. Dieselbe Trocknungsaufgabe kann auch mit 3 Inertgasteilströmen gelöst werden, die über die Höhe der Vorrichtung von oben nach unten abnehmen, und zwar einem ersten Inertgasteilstrom im oberen Bereich von 10 800 Nm³/h und einer Geschwindigkeit von 1,16 m/sec, einem zweiten Inertgasteilstrom von 4000 Nm³/h und einer Geschwindigkeit von 0,65 m/sec im mittleren Bereich und einem dritten Inertgasteilstrom von 3600 Nm³/h und einer Geschwindigkeit von 0,58 m/sec im unteren Bereich der Vorrichtung. Der insgesamt erforderliche Gasmengenstrom kann somit von 25 000 Nm³/h auf 18 400 Nm³/h reduziert werden. Daraus ergibt sich eine Energieersparnis von ca. 10 %.

Gemäß einer weiteren bevorzugten Ausführungsvariante wird der Inertgasstrom über jeweils eine Verteilungs- und Rückhalteeinrichtung zwei oder mehreren parallel geschalteten quaderförmigen Grundkörpern auf eine Seitenfläche derselben zugeführt und über jeweils eine Verteilungs- und Rückhalteeinrichtung auf der jeweils gegenüberliegenden Seitenfläche abgeführt. Durch die Parallelanordnung von mindestens zwei quaderförmigen Grundkörpern ist es möglich, den Granulatstrom auf dieselben aufzuteilen und somit eine kompakte Bauweise der Vorrichtung zu gewährleisten. Der Inertgasstrom wird auf die mit Granulat beaufschlagten quaderförmigen Grundkörper verteilt, nach Durchströmen der Granulatschüttungen wieder zusammengeführt und anschließend über die gemeinsame Entstaubung, beispielsweise mittels eines Zyklons, über ein Gebläse und einen Aufheizer geleitet.

Polykondensate, insbesondere Polyamidkondensate, enthalten nach der Herstellung noch Restmonomere sowie lineare und zyklische Oligomere. Der Gehalt an Restmonomeren und Oligomeren ist in der Regel kleiner als 2 %, kann aber im Einzelfall wesentlich höher sein, wobei insbesondere bei hydrolytischer Schmelzepolymerisation Anteile von 9 bis 12 % der Regelfall sind. Da die Restmonomere und Oligomere in den nachfolgenden Verarbeitungsstufen Probleme bereiten, insbesondere durch Bildung von Ablagerungen und Belägen auf den Apparaten, müssen die Restmonomere und Oligomere entfernt werden, üblicherweise durch Extraktion, insbesondere durch Gegenstromextraktion mit Wasser. Nach der Extraktionsstufe liegt daher ein feuchtes Granulat vor, das im Falle von Polyamid 6-Granulat in der Regel einen Wassergehalt von 11 bis 15 Gew.-%, insbesondere von 12 bis 14 Gew.-% aufweist. Um einen hydrolytischen Abbau bei der nachfolgenden Verarbeitung zu vermeiden, muß das feuchte Polykondensatgranulat weitgehend getrocknet werden, wobei Feuchtegehalte von maximal ca. 0,1 Gew.-% angestrebt werden.

Beim Trocknen wird das feuchte Polykondensatgranulat auf eine Temperatur im Bereich zwischen einer Mindesttemperatur von 105 bis 120°C und einer Höchsttemperatur von 2°C unterhalb seines Erweichungspunktes aufgeheizt und getrocknet, wobei als Erweichungspunkt vorliegend diejenige Temperatur definiert sei, bei der mehr als 2 % aller Teilchen agglomeriert, gesintert oder oberflächlich verhakt vorliegen. Der Erweichungspunkt des Polykondensats hängt im wesentlichen von seinem chemischen Aufbau, Kristallinitätsgrad sowie Art und Menge von Zusatzstoffen ab. Im Falle von Polyamid 6 beginnt der Erweichungspunkt in der Regel bei ca. 190 bis 195°C. Die vorgegebene Feuchteabreicherung wird erreicht, indem die Verweilzeit des Granulats im Kreuzstromapparat entsprechend eingestellt wird. Polyamid 6-Granulat kann beispielsweise von einer Anfangsfeuchte von 11 bis 15 Gew.-% in einem Kreuzstromapparat in ca. 30 Minuten bei einer Temperatur von 180 bis 195°C auf einen Feuchtegehalt von ca. 1 Gew.-% getrocknet werden. Bei längeren Verweilzeiten können entsprechend niedrigere Feuchtegehalte erreicht werden. Die Trocknungskinetik ist temperaturabhängig: tiefere Temperaturen erfordern längere Verweilzeiten.

Insbesondere bei Großanlagen kann es vorteilhaft sein, mehrere Kreuzstromapparate in Serie hintereinander zu schalten unter Zwischenerhitzung des Inertgasstroms, wodurch die Inertgasverteilung verbessert und die Aufheizung und Trocknung des Granulats weiter vergleichmäßigt wird.

Das weitgehend trockene und aufgeheizte Granulat gelangt anschließend in einen Verweilapparat, wo der weitere Molmassenaufbau durch Festphasenkondensation und die Nachtrocknung des Granulats, im Falle von Polyamid 6 insbesondere auf eine Restfeuchte von weniger als 0,06 Gew.-%, erfolgen.

Als Verweilapparat wird ein Schachttrockner mit inaktivem Schacht, d.h mit nur geringem Stickstoffstrom, eingesetzt , den das Polykondensat aufgrund der Schwerkraft durchströmt. Über den Granulatstand im Schacht können unterschiedliche Verweilzeiten eingestellt und damit Produkte unterschiedlichen Molekulargewichts auf hohem Temperaturniveau hergestellt werden.

Zweckmäßig schließt man im Schachttrockner den Luftsauerstoff aus, indem ein geringer Frischstickstoffstrom im Gegenstrom zum Polykondensat durch den Apparat gefahren wird.

Es ist jedoch außerhalb des Rahmens der Erfindung auch möglich, anstatt einen sogenannten inaktiven Schacht, d. h. mit nur geringem Stickstoffstrom, einen sogenannten aktiven Schacht, mit zusätzlichem Inertgaskreislauf, einzusetzen. Dabei ist es sowohl möglich, die Inertgaskreisläufe von Kreuzstrom- und Schachtapparat miteinander zu verknüpfen wie auch diese getrennt zu betreiben.

Diese Verfahrensvariante mit aktivem Schachttrockner ist insbesondere bei Kapazitätssteigerungen von vorhandenen Schachttrocknern durch einen zusätzlichen, vorgeschalteten Kreuzstromtrockner wirtschaftlich interessant.

Dem Kreuzstromtrockner kommt dann lediglich die Aufgabe zu, das Granulat von einer Anfangsfeuchte von ca. 12 % auf eine Feuchte von ca. 6 % zu trocknen.

Im nachfolgenden Schachttrockner mit eigenem Gaskreislauf (oder verknüpft mit dem Kreuzstromtockner) erfolgt dann die weitere Trocknung auf Feuchtgehalte von weniger als 0,06 Gew.-%.

Die Dimensionierung des Kreuzstromstrockners für eine derartige Trocknungsaufgabe sei im folgenden Beispiel verdeutlicht:

Gegeben sei ein Schachttrockner mit einem Granulatdurchsatz von 4000 kg/h, einer Anfangsfeuchte des Granulats von 12 Gew.-% und einer Endfeuchte von 0,06 Gew.-%. Durch Vorschalten eines Kreuzstromtrockners kann der Durchsatz durch den Schachttrockner bei gleicher Anfangs- und Endfeuchte auf 8000 kg/h erhöht werden. Der Kreuzstromtrockner hat dabei eine Dicke von 0,4 m, eine Anstromfläche von 5 m² und einen Dampfvolumenstrom von 11.000 Nm³/h bei einer Dampfeintrittstemperatur von 180°C. Im Kreuzstromtrockner wird die Granulatfeuchte dabei von 12 auf 6 Gew.-% erniedrigt.

Das den Verweilapparat verlassende Polykondensatgranulat wird anschließend in einem Kühlapparat abgekühlt (Verfahrensstufe c), wobei erfindungsgemäß hierfür ein Kreuzstromapparat eingesetzt wird. Dabei wird die Temperatur des Polykondensatgranulats in der Regel auf einen Wert im Bereich von 30 bis 60°C, bevorzugt von 40 bis 50°C, abgesenkt. Als Kühlgas kann jedes dafür übliche Gas oder Gasgemisch eingesetzt werden, insbesondere Stickstoff oder Luft, bevorzugt Luft.

Das Verfahren und die Anlage sind besonders zur Trocknung und Nachkondensation von Polykondensatgranulaten geeignet, insbesondere von Polyester- oder Polyamidgranulat, besonders bevorzugt von Polyamid 6-Granulat.

Der Kreuzstromapparat verbindet die Vorteile der bekannten Schacht- und Wirbelbettapparate: so liegt analog dem Schacht eine enge Granulat-Verweilzeitverteilung vor. Zudem können die Granulatschichtdicken in der Trocknungszone sehr viel kleiner gewählt werden als in einem konventionellen Schachttrockner, da eine gleichmäßige Gasverteilung durch die eingebauten Verteilungs- und Rückhalteeinrichtungen effizient erreicht wird. Dadurch sind die Druckverluste wesentlich geringer und somit die erforderliche Gebläseleistung und letztendlich die Energiekosten.

Weiterhin kann der Inertgasmengenstrom in weiten Grenzen variiert werden, weil im Gegensatz zum Wirbelbettapparat der Granulattransport nicht durch das Inertgas, sondern durch die Schwerkraft erfolgt. Die untere Grenze der Inertgasmenge ist dabei abhängig von der gewählten Granulatschichtdicke, dem Granulatdurchsatz, der vorgegebenen Feuchteabreicherung und Granulataufheizung.

Nach oben ist der Inertgasmengenstrom im Gegensatz zu den bekannten Schachtund Wirbelbettapparaten nicht durch den Wirbelpunkt des Granulats begrenzt.

Eine Steigerung der Inertgasmenge über die mit dem Wirbelpunkt des Granulats verknüpfte Inertgasmenge hinaus ist aufgrund der konstruktiven Gegebenheiten, insbesondere der Verteilungs- und Rückhalteeinrichtungen, möglich.

Die Entkopplung von Trocknung und Nachkondensation und der intensive Stoff- und Wärmeaustausch im Kreuzstromapparat gestatten es, beide Verfahrensschritte, sowohl Trocknung als auch Nachkondensation, auf sehr hohem Temperaturniveau zu betreiben. Aufgrund der variabel einstellbaren Granulatverweilzeit im Verweilapparat ist dies auch bei niedermolekularen Faservorprodukten möglich, mit den folgenden Vorteilen: zum einen können Trocknung und Nachkondensation im Vergleich zum Stand der Technik erheblich beschleunigt werden, insbesondere auch bei niedermolekularen Faservorprodukten. Gegenüber Verfahren in bekannten Schachtapparaten, mit Verweilzeiten im Bereich von 20 bis 30 Stunden, kann die Zeit zur Trocknung und Nachkondensation auf etwa 5 bis 12 Stunden reduziert werden. Somit kann ein höherer Granulatdurchsatz erreicht werden, ohne daß es notwendig ist, den Durchmesser des Schachtapparats zur Nachkondensation zu vergrößern. Dadurch ist die Pfropfenströmung des Granulats einfacher sicherzustellen und somit die Produktqualität in Folge geringerer Viskositätsschwankungen von Korn zu Korn besser.

Die drastischen Temperaturbedingungen im Kreuzstromapparat, wonach das feuchte Granulat innerhalb von wenigen Minuten auf sehr hohe Temperaturen aufgeheizt wird, sowie im Verweilapparat, der auf einem hohen Temperaturniveau betrieben wird, bewirken eine überraschend starke Absenkung des Oligomergehalts im Polykondensatgranulat. Diese Abreicherung findet überwiegend bereits im Kreuzstromapparat statt. Da auch nach mehrmonatiger Betriebszeit keinerlei Oligomerablagerungen an den Apparaten, Rohrleitungen und Maschinen der Anlage festzustellen waren, wird davon ausgegangen, daß die Oligomerabreicherung durch Reaktion mit der Polymerkette stattgefunden hat.

Es wird somit die Möglichkeit eröffnet, Produkte mit besonders niedrigem Oligomergehalt, insbesondere auch Caprolactam-Dimergehalt, zur Verfügung zu stellen, mit den entsprechenden anwendungstechnischen Vorteilen, insbesondere Reduzierung oder Vermeidung der Spinnrauchbildung in der Faserherstellung, der Belagbildung auf Formteilen bei der Spritzgußverarbeitung oder dem Walzenbelag bei der Folienherstellung.

Ferner wird die Möglichkeit eröffnet, den Durchsatz in der vorgeschalteten Extraktionsstufe zu erhöhen, da gegenüber bekannten Verfahren höhere Gehalte an insbesondere Caprolactam-Oligomeren zugelassen werden können, da diese Oligomere während der erfindungsgemäß durchgeführten Trocknung und Nachkondensation weiter abgereichert werden. Die Abreicherung an Caprolactam-Oligomeren ist nämlich geschwindigkeitsbestimmend für den Extraktionsprozeß, da die Oligomere im Vergleich zu den Monomeren deutlich niedrigere Diffusionskoeffizienten und Löslichkeiten aufweisen.

Ein weiterer Vorteil des Kreuzstromapparates liegt in den deutlich niedrigeren Energiekosten. Dies sei an folgendem Beispiel verdeutlicht:
Um einen Granulatmengenstrom von 7 t/h von einer Anfangsfeuchte von 12 Gew.-% auf ca. 0,2 Gew.-% zu trocknen, wird in einem Schachtapparat mit einem Durchmesser von 4,2 m und einer Granulatschüttung von 5 m Höhe oberhalb des Gaseintritts mit einem Inertgasmengenstrom von ca. 28 000 kg/h durch die Granulatschüttung ein Druckverlust von etwa 300 mbar hervorgerufen, was eine Gebläseleistung von ca. 400 KW erfordert.

Dieselbe Trocknungsaufgabe kann dagegen in einem Kreuzstromapparat gelöst werden mit beispielsweise einer Dicke von 0,3 m, einer Anströmfläche von 36 m² und einem Inertgasmengenstrom von ca. 50 000 kg/h, wobei der auftretende Druckverlust über die Granulatschüttung und die Verteilungs- und Rückhalteeinrichtungen lediglich ca. 60 mbar beträgt. Die erforderliche Gebläseleistung liegt dann bei ca. 200 KW, d. h. die Energiekosten sind gegenüber dem Verfahren im konventionellen Apparat halbiert.

Die Erfindung wird im folgenden anhand einer Figur sowie von Ausführungsbeispielen näher erläutert.

Es zeigen im einzelnen:
- Figur 1: einen in der erfindungsgemäßen Anlage einsetzbaren Kreuzstromapparat,
- Figur 2: eine Serienschaltung von 3 Kreuzstromapparaten in schematischer Darstellung
- Figur 3: eine erfindungsgemäße Anlage zur Trocknung und Nachkondensation von Polykondensatgranulat in fester Phase gemäß der Erfindung in schematischer Darstellung.
- Figur 4a: eine Parallelschaltung von zwei Kreuzstromapparaten und
- Figur 4b: eine Parallelschaltung von drei Kreuzstromapparaten.

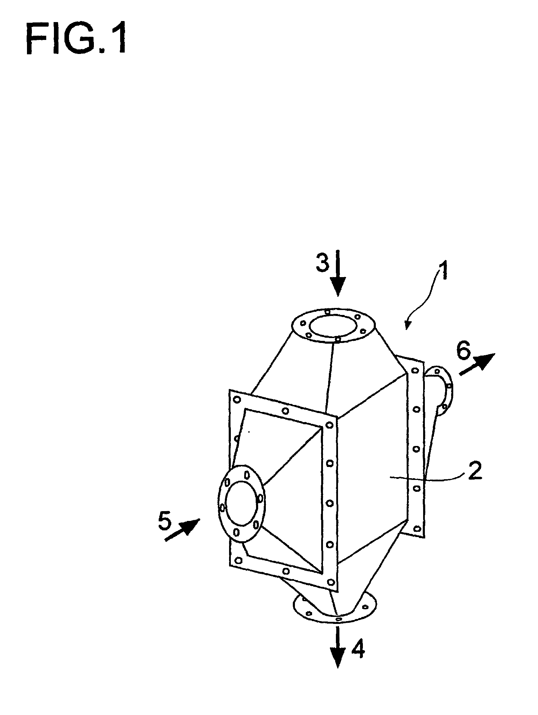

Der in Fig. 1 beispielhaft dargestellte Kreuzstromapparat 1 weist einen quaderförmigen Grundkörper 2 mit einer Zuführung 3 für das Granulat im oberen Teil und einem Auslaß 4 im unteren Teil, sowie mit einer Zuführung 5 auf einer Seitenfläche und einer Abrührung 6 auf der gegenüberliegenden Seitenfläche des quaderförmigen Grundkörpers 2 für den Inertgasstrom auf.

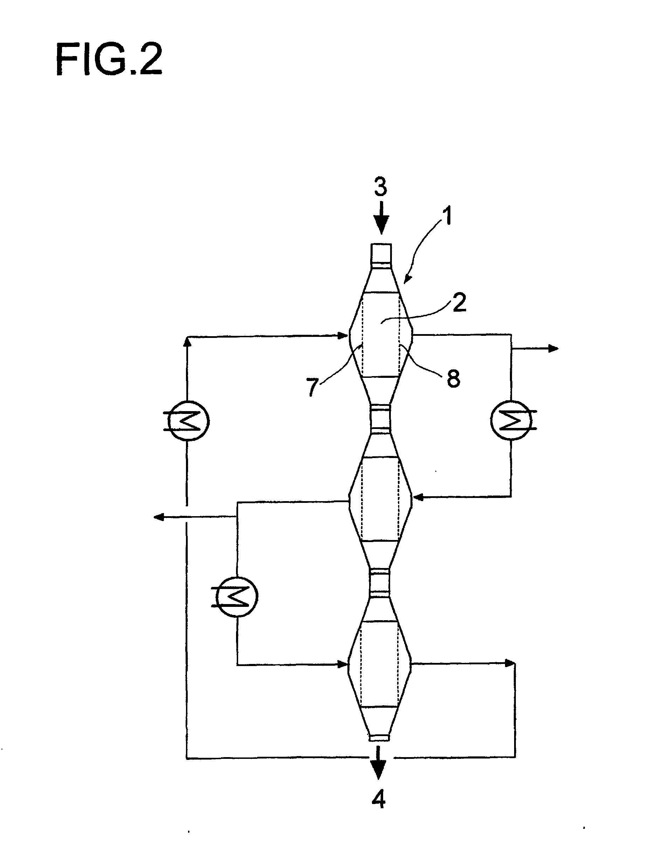

Fig. 2 zeigt schematisch eine Serienschaltung von Kreuzstromapparaten 1, wobei beispielhaft drei Apparate dargestellt sind. In der schematischen Schnittdarstellung der Fig. 2 sind zusätzlich die in Fig. 1 nicht erkennbaren Verteilungs- und Rückhalteeinrichtungen 7 und 8 im Bereich der Zuführung 5 bzw. Abführung 6 des Inertgasstroms zu erkennen. Das Granulat wird dem ersten Kreuzstromapparat in dessen oberen Teil zugeführt (Bezugsziffer 3), durchströmt aufgrund der Schwerkraft den ersten Kreuzstromapparat und anschließend die weiteren in Serie geschalteten Kreuzstromapparate jeweils von oben nach unten und verläßt den letzten Kreuzstromapparat in dessen unterem Teil, am Granulatauslaß 4. Das Inertgas, insbesondere überhitzter Wasserdampf, wird bevorzugt im Kreis durch die hintereinander geschalteten Kreuzstromapparate gefahren, wobei an geeigneten Stellen im Gaskreislauf Zwischenerhitzer geschaltet sind und überschüssiger Dampf nach Bedarf aus dem Kreislauf entfernt wird.

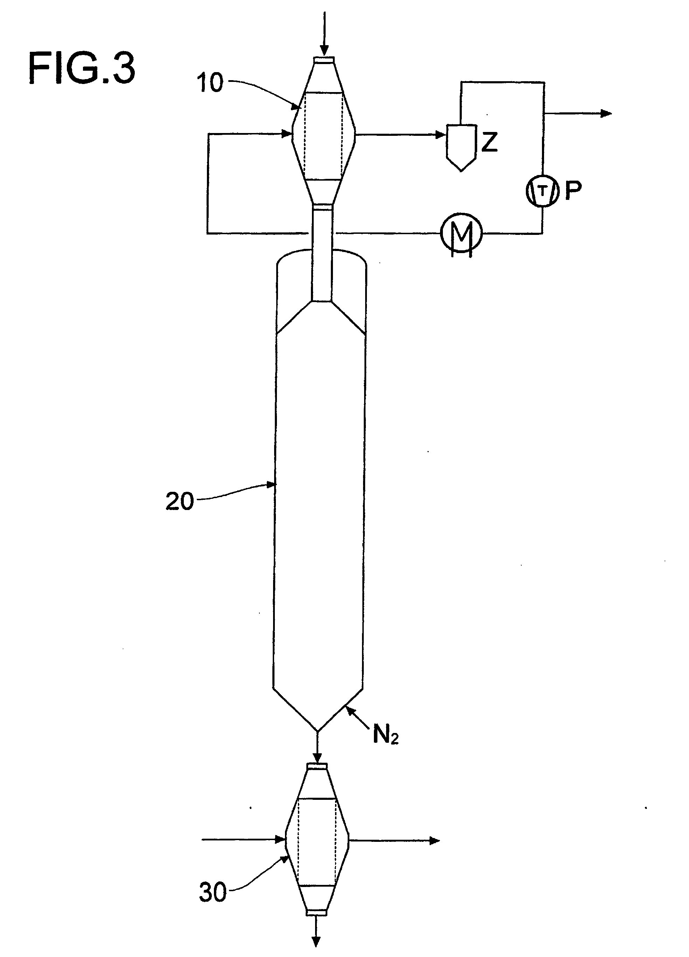

Fig. 3 zeigt eine Anlage zur Trocknung und Nachkondensation von Polykondensatgranulat in fester Phase in schematischer Darstellung: das feuchte Granulat tritt in den oberen Teil eines Kreuzstromapparates 10 ein und wird mit einem Inertgasstrom, vorzugsweise überhitztem Wasserdampf, im Kreuzstrom getrocknet und aufgeheizt. Der aus dem Kreuzstromtrockner austretende Wasserdampf wird beispielsweise über einen Zyklon Z entstaubt und nach erneutem Aufheizen in einem Wärmetauscher im Kreis zum Kreuzstromapparat 10 zurückgeführt. Überschüssiger Wasserdampf wird aus dem Inertgaskreislauf ausgeschleust und kondensiert.

Das getrocknete Granulat gelangt anschließend in einen Schachtapparat 20 und bewegt sich durch diesen aufgrund der Schwerkraft von oben nach unten, im Gegenstrom zu einem geringen Stickstoffstrom. An den Schachtapparat 20 schließt sich ein Kühlapparat 30 an, der ebenfalls als Kreuzstromapparat ausgebildet ist; das Granulat durchströmt den Kühlapparat 30 aufgrund der Schwerkraft von oben nach unten und wird im Kreuzstrom mit einem Kühlgas, insbesondere Luft, gekühlt.

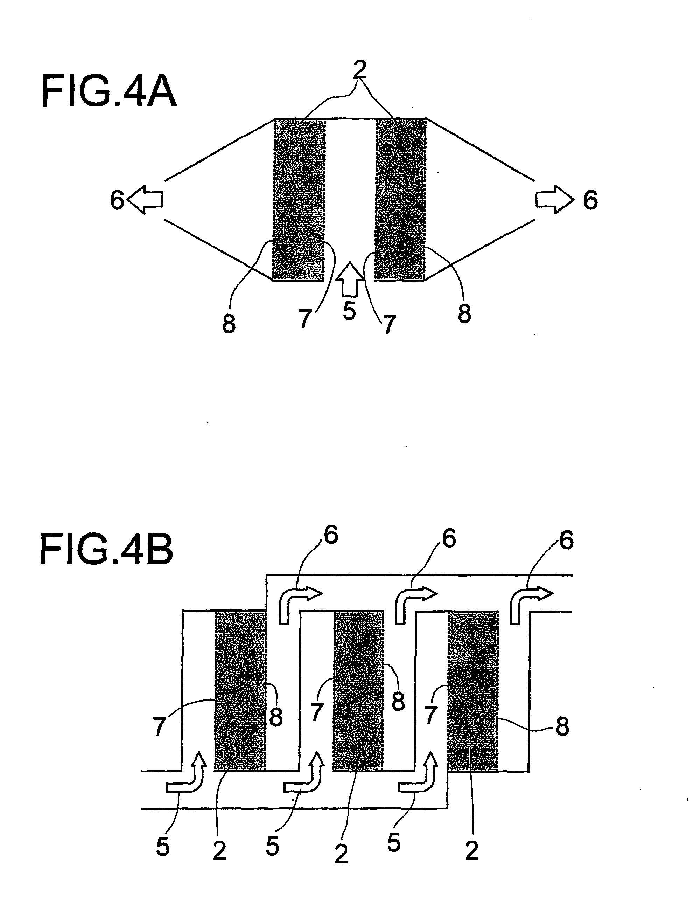

Fig. 4a zeigt eine Parallelschaltung von zwei Kreuzstromapparaten in schematischer Darstellung. Das Granulat wird den beiden quaderförmigen Grundkörpern 2 jeweils in deren oberen Teil zugeführt und im unteren Teil abgeführt. Die beiden Kreuzstromapparate weisen eine gemeinsame Zuführung 5 des Inertgasstroms auf. Das Inertgas strömt über die Verteilungs- und Rückhalteeinrichtungen 7 in das Granulat ein und strömt über die Verteilungs- und Rückhalteeinrichtungen 8 aus dem Granulat aus. Die aus dem Granulat austretenden Inertgasteilströme werden jeweils über die Abführung 6 abgezogen und anschließend in nicht dargestellter Weise vorzugsweise vereinigt.

Fig. 4b zeigt eine Parallelschaltung von drei Kreuzstromapparaten in schematischer Darstellung. Der Inertgasstrom wird auf drei getrennte Zuführungen 5 für den jeweiligen mit Granulat beaufschlagten quaderförmigen Grundkörper 2 aufgetrennt; analog werden die drei Abführungen 6 des Inertgasstroms zu einem gemeinsamen Strom vereinigt.

### Beispiele

Die Versuchsbeispiele wurden in einem Kreuzstromapparat gemäß Fig. 1 mit folgenden Abmessungen des quaderförmigen Grundkörpers durchgeführt: Dicke 250 mm, Höhe 500 mm und Tiefe 280 mm, d. h. mit einer mit Inertgas beaufgeschlagten Seitenfläche von 0,125 m².

Als Verteilungs- und Rückhalteeinrichtungen wurden CONIDUR®-Feinlochbleche der Hein, Lehmann Trenn- und Fördertechnik GmbH eingesetzt, wobei das Feinlochblech im Bereich der Zuführung des Inertgasstroms (Bezugsziffer 7 in Fig. 2) die Abmessungen:
Blechdicke: 0,5 mm,
Sieböffnung: 0,6 mm und
Freie Fläche: ca. 14 %,
und das Feinlochblech im Bereich der Abführung des Inertgasstroms (Bezugsziffer 8 in Fig. 2) die Abmessungen:
Blechdicke: 0,75 mm,
Sieöffnung: 0,8 mm und
Freie Fläche: ca. 15 %
aufwies. Das Volumen des quaderförmigen Grundkörpers betrug entsprechend den oben aufgeführten Abmessungen 35 l. Bei einem Granulatschüttgewicht von 650 kg/qm³ betrug der Granulatinhalt des quaderförmigen Grundkörpers somit ca. 23 kg.

In diesen Kreuzstromapparat wurde kontinuierlich von oben extrahiertes Polyamid 6-Granulat in zylindrischer Form, mit einer Höhe von ca. 3 mm und einem Durchmesser von ca. 2 mm, einem mittleren Korngewicht von 12,5 bis 14,5 mg, einem Anfangsfeuchtegehalt von 13 Gew.-% und einer relativen Viskosität von 2,05 eingetragen. Der Granulatdurchsatz wurde im Bereich von 25 bis 75 kg/h variiert, entsprechend einer Verweilzeit im Kreuzstromapparat von 55 bis 18 Minuten. Über ein Gebläse wurde überhitzter Wasserdampf mit einer Temperatur von 180°C seitlich über einen Spaltsiebboden in den Kreuzstromapparat eingeleitet. Der auf der anderen Seite austretende Gasstrom wurde über einen Zyklon geführt, entstaubt und nach erneutem Aufheizen in den Kreuzstromapparat zurückgeführt. Überschüssiger Wasserdampf wurde aus dem Kreislauf ausgeschleust und kondensiert. Die Kreisgasmenge wurde im Bereich von 200 bis 70 m³/h variiert. Der gasseitige Druckverlust über den Kreuzstromapparat betrug in Abhängigkeit vom Gasdurchsatz 3 bis 25 mbar. Die Fahrparameter des Kreuzstromapparates und die dazu gehörigen Analysendaten sind in der nachfolgenden Tabelle 1 aufgeführt.

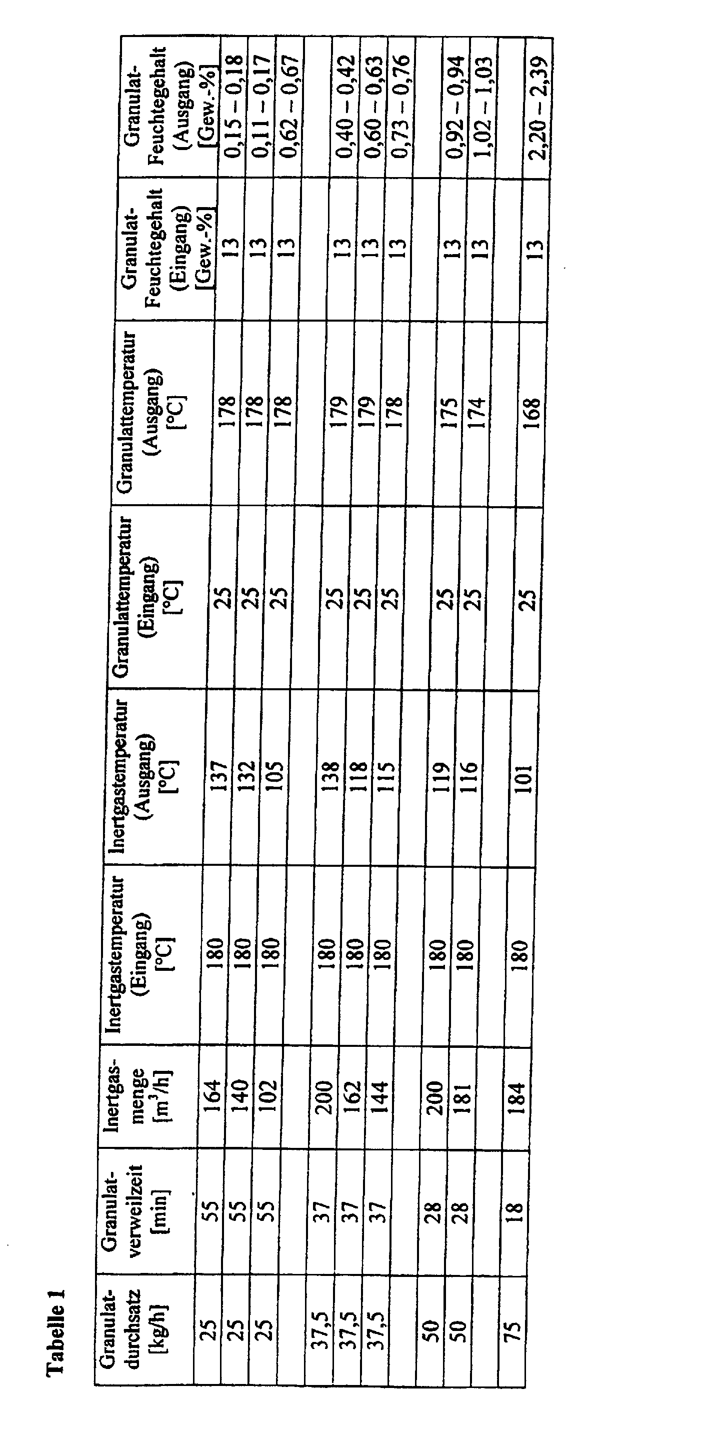

Das aus dem Kreuzstromapparat austretende Granulat wurde anschließend in einen Schachtapparat zur Nachkondensation bei einer Temperatur von 178°C und einer Verweilzeit von 6 Stunden überführt. Der Schachtapparat war lediglich schutzbeheizt, d. h von außen wurde keine weitere Energie zugeführt. Für die Nachtrocknung wurde in den Konusbereich des Schachtapparates eine geringe Frischstickstoffmenge von ca. 1 m³/h zugeführt. Das Granulat wurde schließlich einem zweiten Kreuzstromapparat zugeführt und innerhalb von 5 Minuten auf 50°C abgekühlt, wobei als Kühlgas Luft verwendet wurde.

Die relative Viskosität nach der Nachkondensation im Schachtapparat betrug 2,47 und die Restfeuchte 0,01 Gew.-%.

## Patentansprüche

1. Kontinuierliches Verfahren zur Trocknung und Nachkondensation von Polykondensatgranulat in fester Phase, wonach
a. in einem oder mehreren Apparaten das Polykondensatgranulat getrocknet und auf eine Temperatur im Bereich zwischen einer Mindesttemperatur von 105 bis 120°C und einer Höchsttemperatur von 2°C unterhalb seines Erweichungspunktes aufgeheizt,
b. danach in einem Verweilapparat behandelt und
c. anschließend in einem Kühlapparat abgekühlt wird, **dadurch gekennzeichnet, dass** man zumindest als Apparat(e) in Stufe a eine Vorrichtung (1) wählt, die einen quaderförmigen Grundkörper (2) aufweist, mit einer Zuführung (3) für das Polykondensatgranulat im oberen Teil und einem Auslaß (4) im unteren Teil, mit einer Zuführung (5) auf einer Seitenfläche und einer Abführung (6) auf der gegenüberliegenden Seiterfläche des quaderförmigen Grundkörpers (2) für einen Inertgasstrom sowie mit je einer Verteilungs- und Rückhalteeinrichtung (7, 8) im Bereich der Zuführung *(5)* und Abführung (6) des Inertgasstromes, die sich jeweils im wesentlichen über den gesamten vertikalen Querschnitt des quaderförmigen Grundkörpers (2) erstreckt, und dass man als Verweilapparat in Stufe b einen Schachttrockner mit inaktivem Schacht einsetzt.

2. Verfahren nach Anspruch 1, **dadurch gekennzeichnet, dass** man als Kühlapparat in Stufe c eine Vorrichtung (1) einsetzt mit einem quaderförmigen Grundkörper (2), mit einer Zuführung (3) für das Polykondensatgranulat im oberen Teil und einem Auslaß (4) im unteren Teil, mit einer Zuführung (5) auf einer Seitenfläche und einer Abführung (6) auf der gegenüberliegenden Seitenfläche des quaderförmigen Grundkörpers (2) für den Inertgasstrom sowie mit je einer Verteilungs- und Rückhalteeinrichtung (7, 8) im Bereich der Zuführung (5) und Abführung (6) des Inertgasstromes, die sich jeweils im wesentlichen über den gesamten vertikalen Querschnitt des quaderförmigen Grundkörpers (2) erstreckt.

3. Anlage zur Trocknung und Nachkondensation von Polykondensatzgranulat in fester Phase nach einem Verfahren gemäß Anspruch 1 oder 2 mit mindestens einer Vorrichtung (1) mit einem quaderförmigen Grundkörper (2) mit einer Zuführung (3) für das Polykondensatgranulat im oberen Teil und einem Auslaß (4) im unteren Teil, mit einer Zuführung (5) auf einer Seitenfläche und einer Abführung (6) auf der gegenüberliegenden Seitenfläche des quaderförmigen Grundkörpers (2) für einen Inertgasstrom sowie mit je einer Verteilungs- und Rückhalteeinrichtung (7, 8) im Bereich der Zufuhrung (5) und Abführung (6) des Inertgasstromes, die sich jeweils im wesentlichen über den gesamten vertikalen Querschnitt des quaderförmigen Grundkörpers (2) erstreckt, zum Trocknen und Aufheizen des eingesetzten Polykondensatgranulats, mit einem damit verbundenen Schachttrockner mit inaktivem Schacht als Verweilapparat, sowie mit einem Kühlapparat.

4. Anlage nach Anspruch 3, **dadurch gekennzeichnet, dass** man als Kühlapparat eine Vorrichtung (1) mit einem quaderförmigen Grundkörper (2) einsetz, mit einer Zuführung (3) für das Polykondensatgranulat im oberen Teil und einem Auslaß (4) im unteren Teil, mit einer Zufuhrung (5) auf einer Seitenfläche und einer Abführung (6) auf der gegenüberliegenden Seitenfläche des quaderförmigen Grundkörpers (2) für den Inertgasstrom sowie mit je einer Verteilungs- und Rückhalteeinrichtung (7, 8) im Bereich der Zuführung (5) und Abführung (6) des Inertgasstromes, die sich jeweils im wesentlichen über den gesamten vertikalen Querschnitt des quaderförmigen Grundkörpers (2) erstreckt.

5. Verwendung der Anlage nach einem der Ansprüche 3 oder 4 oder des Verfahrens nach einem der Ansprüche 1 oder 2 zur Trocknung und Nachkondensation von Polykondensatgranulaten, insbesondere von Polyester- oder Polyamidgranulat, besonders bevorzugt von Polyamid 6-Granulat.

## Claims

1. A continuous process for the drying and post condensation of polycondensate pellets in the solid phase, by
a) in one or more apparatuses, drying the polycondensate pellets and heating them to a temperature in the range from a minimum temperature of 105-120°C to a maximum temperature which is below their softening point by 2°C
b) then treating the pellets in a holding apparatus, and
c) then cooling the pellets in a cooling apparatus, which comprises selecting, at least as apparatus(es) in stage a, a device (1) which has a cuboid base unit (2), with a feed (3) for the polycondensate pellets in the upper part and with an outlet (4) in the lower part, with a feed (5) on one lateral surface, and with an exhaust (6) on the opposite lateral surface of the cuboid base unit (2) for an inert gas stream, and also with distribution equipment and retention equipment (7, 8) in the region of the feed (5) and exhaust (6) for the inert gas stream, each of these extending substantially over the entire vertical cross section of the cuboid base unit (2), and which comprises using a passive-duct tower drier air folding apparatus in stage b.

2. A process as claimed in claim 1, wherein, as cooling apparatus in stage c, use is made of a device (1) with a cuboid base unit (2), with a feed (3) for the polycondensate pellets in the upper part and with an outlet (4) in the lower part, with a feed (5) on one lateral surface, and with an exhaust (6) on the opposite lateral surface of the cuboid base unit (2) for an inert gas stream, and also with distribution equipment and retention equipment (7, 8) in the region of the feed (5) and exhaust (6) for the inert gas stream, each of these extending substantially over the entire vertical cross section of the cuboid base unit (2).

3. An installation for the drying and post condensation of polycondensate pellets in the solid phase by a process as claimed in claim 1 or 2, with at least one device (1) which has a cuboid base unit (2), with a feed (3) for the polycondensate pellets in the upper part and with an outlet (4) in the lower part, with a feed (5) on one lateral surface, and with an exhaust (6) on the opposite lateral surface of the cuboid base unit (2) for an inert gas stream, and also with distribution equipment and retention equipment (7, 8) in the region of the feed (5) and exhaust (6) for the inert gas stream, each of these extending substantially over the entire vertical cross section of the cuboid base unit (2), for the drying and heating of the polycondensate pellets used, with a passive-duct tower dryer associated therewith as holding apparatus, and also with a cooling apparatus.

4. An installation as claimed in claim 3, wherein, as cooling apparatus, use is made of an apparatus (1) which has a cuboid base unit (2), with a feed (3) for the polycondensate pellets in the upper part and with an outlet (4) in the lower part, with a feed (5) on one lateral surface, and with an exhaust (6) on the opposite lateral surface of the cuboid base unit (2) for the inert gas stream, and also with distribution equipment and retention equipment (7, 8) in the region of the feed (5) and exhaust (6) for the inert gas stream, each of these extending substantially over the entire vertical cross section of the cuboid base unit (2).

5. The use of the installation as claimed in claim 3 or 4, or of the process as claimed in claim 1 or 2, for the drying and post-condensation of polycondensate pellets in particular of polyester pellets or polyamide pellets, particularly preferably of polyamide-6 pellets.

## Revendications

1. Procédé continu pour le séchage et la post-condensation de granulés en phase solide, selon lequel
a. dans un ou plusieurs appareils, le granulé de polycondensat est séché et chauffé à une température dans une plage allant d'une température minimale de 105 à 120°C à une température maximale inférieure de 2°C à son point de ramollissement,
b. puis traité dans un appareil de maturation,
c. refroidi ensuite dans un appareil de refroidissement,
**caractérisé en ce que**, dans l'étape a, on choisit comme appareil(s) au moins un dispositif (1) présentant un corps de base parallélépipédique (2), avec une amenée (3) pour les granulés de polyconsensat dans sa partie supérieure et une décharge (4) dans sa partie inférieure, avec une entrée (5) sur une surface latérale du corps de base parallélépipédique (2) et une sortie (6) sur la face latérale opposée, destinées à un courant de gaz inerte, avec à chaque fois un dispositif de distribution et de rétention (7,8) dans la zone de l'amenée (5) et de la sortie (6) du courant de gaz inerte, s'étendant à chaque fois essentiellement sur toute la section transversale verticale du corps de base parallélépipédique (2), et **en ce que** l'on met en oeuvre dans l'étape b, comme appareil de maturation, un séchoir à colonne avec colonne non active.

2. Procédé selon la revendication 1, **caractérisé en ce que** l'on met en oeuvre comme appareil de refroidissement, dans l'étape c, un dispositif (1) présentant un corps de base parallélépipédique (2), avec une amenée (3) pour les granulés de polyconsensat dans sa partie supérieure et une décharge (4) dans sa partie inférieure, avec une entrée (5) sur une surface latérale du corps de base parallélépipédique (2) et une sortie (6) sur la face latérale opposée, destinées à un courant de gaz inerte, et avec à chaque fois un dispositif de distribution et de rétention (7,8) dans la zone de l'entrée (5) et de la sortie §5) du courant de gaz inerte, s'étendant à chaque fois essentiellement sur toute la section transversale verticale du corps de base parallélépipédique (2).

3. Installation pour le séchage et la post-condensation de granulés de polycondensat en phase solide par un procédé selon la revendication 1 ou 2, comportant au moins au moins un dispositif (1) présentant un corps de base parallélépipédique (2), avec une amenée (3) pour les granulés de polyconsensat dans sa partie supérieure et une décharge (4) dans sa partie inférieure, avec une entrée (5) sur une surface latérale du corps de base parallélépipédique (2) et une sortie (6) sur la face latérale opposée, destinées à un courant de gaz inerte, avec à chaque fois un dispositif de distribution et de rétention (7,8) dans la zone de l'amenée (5) et de la sortie (6) du courant de gaz inerte, s'étendant à chaque fois essentiellement sur toute la section transversale verticale du corps de base parallélépipédique (2), pour le séchage et le chauffage du granulé de polycondensat mis en oeuvre, avec un séchoir à colonne avec colonne non active en tant qu'appareil de maturation, ainsi qu'un appareil de refroidissement.

4. Installation selon la revendication 3, **caractérisée en ce que** l'on met en oeuvre en tant qu'appareil de refroidissement un dispositif (1) présentant un corps de base parallélépipédique (2), avec une amenée (3) pour les granulés de polyconsensat dans sa partie supérieure et une décharge (4) dans sa partie inférieure, avec une entrée (5) sur une surface latérale du corps de base parallélépipédique (2) et une sortie (6) sur la face latérale opposée, destinées à un courant de gaz inerte, avec à chaque fois un dispositif de distribution et de rétention (7,8) dans la zone de l'amenée (5) et de la sortie (6) du courant de gaz inerte, s'étendant à chaque fois essentiellement sur toute la section transversale verticale du corps de base parallélépipédique (2).

5. Utilisation de l'installation selon l'une quelconque des revendications 3 ou 4 ou du procédé selon l'une quelconque des revendications 1 ou 2 pour le séchage et la post-condensation de granulés de polyconsensat, en particulier des granulés de polyester ou de polyamide, plus préférentiellement des granulés de polyamide 6.
